# EUROPÄISCHE PATENTSCHRIFT

(11) **EP 2 713 460 B1**
(45) Veröffentlichungstag und Bekanntmachung des Hinweises auf die Patenterteilung: **16.03.2016**
(21) Anmeldenummer: 13185913.4
(22) Anmeldetag: 25.09.2013
(51) Int. Cl.: H02G 15/007, H04M 1/15, H02G 11/02

(54) **Kabel-Zugentlastungs-Halterung**
Cable strain relief mount
Support de décharge de traction de câble

(30) Priorität: 01.10.2012 DE 102012217941
(43) Veröffentlichungstag der Anmeldung: 02.04.2014
(73) Patentinhaber: Aktiebolaget SKF, 415 50 Göteborg (SE)
(72) Erfinder: Lietz, Jan, 68220 Hésingue (FR); Panzer, Hans-Peter, 79540 Lörrach (DE); Voegelin, Martin, 4434 Hölstein (CH)
(74) Vertreter: Schonecke, Mitja

(56) Entgegenhaltungen:
- WO-A1-2007/064262
- GB-A- 1 471 654
- US-A- 5 519 171
- US-A1- 2010 220 969

## Beschreibung

Die Erfindung betrifft eine Kabel-Zugentlastungs-Halterung für ein wendelförmig verlaufendes Kabel, umfassend ein Säulenelement, das sich in eine axiale Richtung erstreckt und eine äußere Umfangsfläche aufweist, und mindestens zwei Halteelemente, die sich radial erstreckend an der äußeren Umfangsfläche angeordnet sind, wobei die mindestens zwei Halteelemente an verschiedenen axialen Positionen und an verschiedenen Umfangspositionen des Säulenelements angeordnet sind.

Unter Kabel sind vorliegend vor allem elektrische Kabel zu verstehen, die sich wendelförmig erstrecken (oft als "Spiralkabel" bezeichnet), so dass sie es erlauben, entlang der Längsrichtung in erheblichem Maße gezogen werden zu können, was durch die wendelförmige Struktur des Kabels ermöglicht wird (z. B. das Kabel eines Telefonhörers). Aber auch andere Arten von Kabeln bzw. Leitungen sind von der vorliegenden Idee umfasst, wie beispielsweise Luftleitungen, die häufig ebenfalls wendelförmig ausgeformt sind, um sie mit einem großen Dehnungsvermögen auszustatten.

Bekannt ist es, besagte Kabel beispielsweise an einem Gehäuse mittels einer Kabel-Zugentlastungs-Halterung zu fixieren, so dass das Kabel an einer axialen Position gesichert und vor Beschädigungen geschützt ist. Halterungen dieser Art sind oft als bandförmiges Element ausgebildet, das an seinen beiden Endseiten mittels Schrauben am Gehäuse festgelegt wird (Kabelklemmen), wodurch das Kabel geklemmt und somit festgelegt wird. Mit einer solchen Halterung kann am Kabel gezogen werden, ohne Gefahr zu laufen, dass es sich vom Gehäuse löst.

Kabel-Zugentlastungs-Halterungen der genannten Art sind beispielsweise aus der US 2010/0233917 A1, aus der US 2008/0288014 A1 und aus der US 5 240 092 A bekannt.

In der US 5 519 171 wird eine Vorrichtung beschrieben, mit der zwei Kabel so verbunden werden können, dass kein Zug zwischen der Verbindungsstelle der Kabel auftritt. Hierfür ist ein Trägerelement vorhanden, das das eine Kabel hält, sowie ein Hülsenelement, das das andere Kabel hält und das auf das Trägerelement aufgesteckt und mit diesem verbunden wird. Andere Lösungen zeigen die US 2010/0220969 A1, die WO 2007/064262 A1 und die GB 1 471 654.

Der Erfindung liegt die **Aufgabe** zugrunde, eine gattungsgemäße Kabel-Zugentlastungs-Halterung zu schaffen, die mit möglichst wenigen Bauteilen auskommt und aufwändige Montagemaßnahmen entbehrlich macht. Ein wendelförmig verlaufendes Kabel soll zuverlässig und einfach ohne Werkzeug an der Halterung festgelegt werden können. Dennoch soll sichergestellt sein, dass das Kabel an einer seiner axialen Positionen relativ zur Halterung zuverlässig festgelegt. Des Weiteren wird angestrebt, dass die Gefahr einer Beschädigung des Kabels minimiert wird.

Die **Lösung** dieser Aufgabe durch die Erfindung ist dadurch gekennzeichnet, dass die Halteelemente so am Säulenelement angeordnet sind, dass sie einer gedachten wendelförmigen Linie folgen, wobei das Säulenelement mit einem seiner axialen Enden mit einer Halteplatte verbunden ist und an seinem anderen axialen Ende frei ist.

Die Halteelemente sind bevorzugt stift- oder stabförmig ausgebildet und erstrecken sich senkrecht zur axialen Richtung radial vom Säulenelement weg.

Die Halteelemente können eine Unterseite aufweisen, die zur Anlage des zu haltenden Kabels ausgebildet sind. Die Unterseite der Halteelemente kann hierzu eine der äußeren Form des Kabels kongruente Ausnehmung aufweisen, insbesondere eine kreisbogenabschnittsförmige Gestalt.

Unterhalb der Halteelemente kann mindestens eine stift- oder stabförmig ausgebildete Einfädelhilfe angeordnet sein, die sich senkrecht zur axialen Richtung radial vom Säulenelement weg erstreckt.

Das Säulenelement und die Halteelemente und gegebenenfalls die Einfädelhilfe können einstückig ausgebildet sein. Es ist aber alternativ auch möglich, dass die Halteelemente und gegebenenfalls die Einfädelhilfe als separate Teile hergestellt sind, die am Säulenelement befestigt sind.

Die Kabel-Zugentlastungs-Halterung besteht bevorzugt aus Kunststoff.

Das wendelförmig verlaufende Kabel kann also um die vorgeschlagene Halterung gewickelt und mittels der Halteelemente fixiert werden. Die Zugentlastung des Kabels ist somit sichergestellt. Es werden keine weiteren Teile benötigt, um das Kabel insoweit an einer Stelle festzulegen und gegen axialen Zug zu entlasten.

Das Anlegen des Kabels an der Halterung kann sehr schnell erfolgen, so dass der Montageaufwand entsprechend gering ist.

Die Anbringung der Kabel-Zugentlastungs-Halterung an einem Kunststoffgehäuse ist in einfacher Weise möglich bzw. die Halterung kann direkt bei der Fertigung des Gehäuses mit integriert werden. In vorteilhafter Weise sind keine weiteren Teile für die Halterung nötig, als oben erwähnt. Insbesondere sind keine Teile anzuschrauben. Auch sind keine metallischen Teile erforderlich, die möglicherweise das Kabel beschädigen können.

Die Anbringung des Kabels an der Halterung kann ohne jegliches Werkzeug von Hand erfolgen. Dieser Vorgang kann auch sehr schnell durchgeführt werden, so dass die Anbringung des Kabels entsprechend kostengünstig ist.

Es ist möglich, beliebige Startpositionen für die Festlegung des Kabels an der Halterung zu wählen.

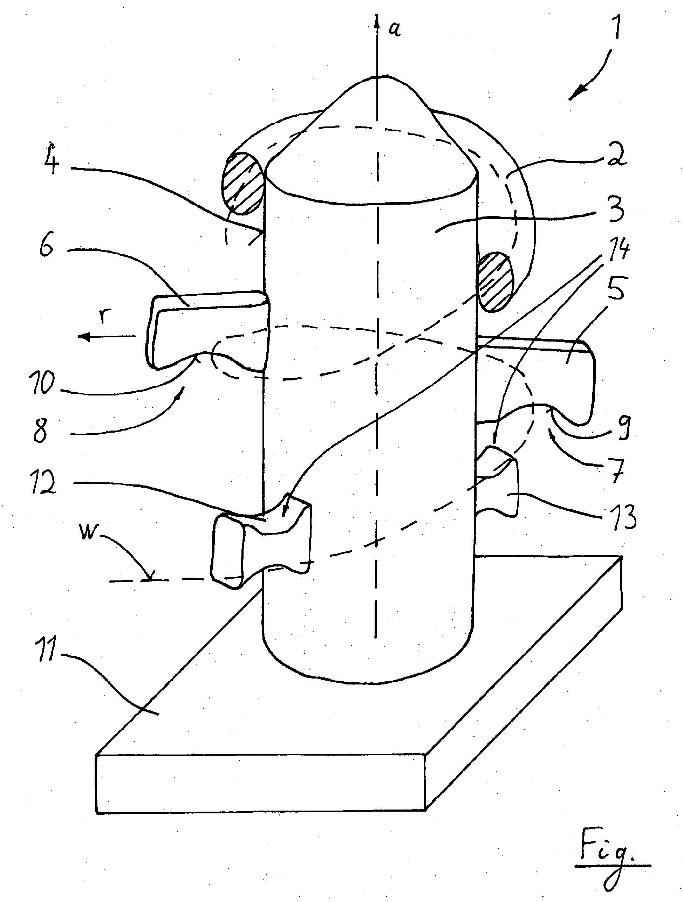

In der Zeichnung ist ein Ausführungsbeispiel der Erfindung dargestellt. Die einzige Figur zeigt in perspektivischer Darstellung eine Kabel-Zugentlastungs-Halterung, wobei der Verlauf eines wendelförmig verlaufenden Kabels ("Spiralkabel") angedeutet ist.

In der Figur ist eine Kabel-Zugentlastungs-Halterung 1 dargestellt. Diese legt ein Kabel 2 fest, von dem nur ein kurzer Abschnitt angedeutet ist. Das Kabel 2 ist als wendelförmig verlaufendes Kabel ("Spiralkabel") ausgebildet, so dass es die Eigenschaft hat, entlang der axialen Erstreckung mit hoher Dehnungseigenschaft gezogen werden zu können.

Als Beispiel sei das Kabel eines Telefonhörers genannt. Derartige Kabel werden aber auch bei diversen maschinenbautechnischen Anwendungen benötigt.

Die Halterung 1 hat als zentrales Bauteil ein Säulenelement 3, das eine zylindrische Gestalt hat, wobei sich vorliegend die axiale Richtung a vertikal erstreckt. Das Säulenelement 3 ist auf einer Halteplatte 11 befestigt, die Bestandteil einer maschinenbautechnischen Anlage sein kann.

Am Säulenelement 3 sind mehrere - vorliegend zwei - Halteelemente 5, 6 angeordnet. Diese sind an der Umfangsfläche 4 des Säulenelements 3 so angeordnet, dass sie sich mit ihrer Hauptausdehnungsrichtung in radiale Richtung r vom Säulenelement 3 weg erstrecken.

Die beiden Halteelement 5, 6 haben an ihrer Unterseite 7 bzw. 8 Ausnehmungen 9 bzw. 10, die kreisbogenabschnittsförmig ausgeführt sind und damit der Kreisquerschnittsform des Kabels 2 angepasst sind.

Verfolgt man den Verlauf der Halteelemente 5, 6 und insbesondere der Ausnehmungen 9 und 10 für die Anlage des Kabels 2, ist zu erkennen, dass sich diese auf einer wendelförmigen Linie w befinden, d. h. sie folgen dem Verlauf des Kabels 2.

Zur Festlegung des Kabels 2 im Bodenbereich der Halterung 1, d. h. auf der Oberfläche der Halteplatte 11, sind zwei sich am Säulenelement 3 diametral gegenüberliegende Einfädelhilfen 12 und 13 angeordnet, die sehr ähnlich zu den Halteelementen 5, 6 ausgebildet sind. Sie weisen aber auch an ihrer Oberseite 14 Ausnehmungen analog zu den Ausnehmungen 9 und 10 auf, die einer verbesserten Gabelführung dienen. Auch an der Unterseite der Einfädelhilfen 12, 13 sind analog Ausnehmungen angeordnet.

Die Erfindung stellt also auf ein zylindrisches oder röhrenförmiges Säulenelement 3 ab (d. h. auf ein Element mit einer zylindrischen oder röhrenförmigen Grundgeometrie, die einen entsprechenden Außendurchmesser aufweist), an dem radial vorspringende Halteelemente 5, 6 angeordnet sind. Der Durchmesser des Säulenelements 3 liegt im Bereich des Innendurchmesser, das das wendelförmig verlaufende Kabel 2 im zugentlasteten Zustand aufweist. Das kann konkret bedeuteten, dass das wendelförmig verlaufende Kabel 2 im zugentlasteten Zustand genau einen Innendurchmesser aufweist, der dem Außendurchmesser des Säulenelements 3 entspricht. Der Innendurchmesser des wendelförmig verlaufenden Kabels 2 im zugentlasteten Zustand kann aber auch gemäß einer bevorzugten Ausführungsform nur zwischen 75 % und 100 % des Außendurchmessers des Säulenelements 3 aufweisen, so dass bei bestimmungsgemäßer Benutzung das Kabel 2 mit elastischer Vorspannung am Außenumfang des Säulenelements 3 anliegt.

Vorteilhaft kann es demnach also sein, wenn der Durchmesser des Säulenelements geringfügig größer als der genannte Kabel-Innendurchmesser gewählt wird. Dann liegt das Kabel 2 nach dem Einfädeln auf das Säulenelement 3 mit geringer elastischer radialer Spannung am Säulenelemente an, was das feste Halten des Kabels begünstigt.

Die Halteelemente 5, 6 sind entlang einer Bahn angeordnet, die dem Gang eines Gewindes entspricht, d. h. entlang der wendelförmigen Bahn w; die Halteelemente 5, 6 entsprechen insoweit also kleinen Umfangsabschnitten eines Gewindes oder eines Schneckengangs, das bzw. der sich um das Säulenelement herum erstreckt.

Die Einfädelhilfen 12, 13 befinden sich auf der Höhe, in der das Kabel 2 am Gehäuse - bzw. vorliegend auf der Halteplatte 11 - festgelegt werden soll. Die Einfädelhilfen 12, 13 können auch bereits auf der genannten wendelförmigen Bahn w angeordnet werden, um das Kabel von hieraus bereits die wendelförmige Bahn w über die Halteelemente 5, 6 führen zu können.

Abhängig von der Werkzeugtechnik können die Halteelemente 5, 6 beim Spritzgießen des Säulenelements 3 mit an diesem angespritzt werden oder auch als separate Teile gefertigt und dann am Säulenelement fixiert werden.

Eine andere fertigungstechnische Möglichkeit besteht darin, beim Spritzgießen des Säulenelements 3 eine gewindeartig verlaufende Nut in den Außenumfang des Säulenelements 3 einzubringen. Später werden Halteelemente 5, 6 an gewünschten Stellen der gewindeförmigen Nut fixiert.

Wird das um das Säulenelement 3 herum angelegte Kabel 2 endseitig gezogen, schlingt sich aufgrund dieses Axialzuges das Kabel 2 fester um das Säulenelement 3 herum, so dass eine erhöhte Reibungskraft erzeugt wird, die das Kabel 2 in seiner Position an der Halterung 1 sichert. Im Zusammenwirken mit den Halteelementen 5, 6 ergibt sich eine zuverlässige Festlegung des Kabels 2 an der Halterung 1, so dass ein Lösen des Kabels 2 von der Halterung ausgeschlossen ist.

Während es in der Regel überflüssig ist, kann natürlich zur zusätzlichen Sicherung des Kabels auch noch eine Kabelklemme vorgesehen werden.

### Bezugszeichenliste

- 1: Kabel-Zugentlastungs-Halterung
- 2: Kabel
- 3: Säulenelement
- 4: Umfangsfläche
- 5: Halteelement
- 6: Halteelement
- 7: Unterseite
- 8: Unterseite
- 9: Ausnehmung
- 10: Ausnehmung
- 11: Halteplatte
- 12: Einfädelhilfe
- 13: Einfädelhilfe
- 14: Oberseite

- a: axiale Richtung
- r: radiale Richtung
- w: wendelförmige Linie

## Patentansprüche

1. Kabel-Zugentlastungs-Halterung (1) für ein wendelförmig verlaufendes Kabel (2), umfassend
ein Säulenelement (3), das sich in eine axiale Richtung (a) erstreckt und eine äußere Umfangsfläche (4) aufweist, und
mindestens zwei Halteelemente (5, 6), die sich radial (r) erstreckend an der äußeren Umfangsfläche (4) angeordnet sind, wobei die mindestens zwei Halteelemente (5, 6) an verschiedenen axialen Positionen und an verschiedenen Umfangspositionen des Säulenelements (3) angeordnet sind,
**dadurch gekennzeichnet, dass**
die Halteelemente (5, 6) so am Säulenelement (3) angeordnet sind, dass sie einer gedachten wendelförmigen Linie (w) folgen, wobei das Säulenelement (3) mit einem seiner axialen Enden mit einer Halteplatte (11) verbunden ist und an seinem anderen axialen Ende frei ist.

2. Kabel-Zugentlastungs-Halterung nach Anspruch 1, **dadurch gekennzeichnet, dass** die Halteelemente (5, 6) stift- oder stabförmig ausgebildet sind und sich senkrecht zur axialen Richtung (a) radial (r) vom Säulenelement (3) weg erstrecken.

3. Kabel-Zugentlastungs-Halterung nach Anspruch 1 oder 2, **dadurch gekennzeichnet, dass** die Halteelemente (5, 6) eine Unterseite (7, 8) aufweisen, die zur Anlage des zu haltenden Kabels (2) ausgebildet sind.

4. Kabel-Zugentlastungs-Halterung nach Anspruch 3, **dadurch gekennzeichnet, dass** die Unterseite (7, 8) der Halteelemente (5, 6) eine der äußeren Form des Kabels (2) kongruente Ausnehmung (9, 10) aufweist, insbesondere eine kreisbogenabschnittsförmige Gestalt.

5. Kabel-Zugentlastungs-Halterung nach einem der Ansprüche 1 bis 4, **dadurch gekennzeichnet, dass** unterhalb der Halteelemente (5, 6) mindestens eine stift- oder stabförmig ausgebildete Einfädelhilfe (12, 13) angeordnet ist, die sich senkrecht zur axialen Richtung (a) radial vom Säulenelement (3) weg erstreckt.

6. Kabel-Zugentlastungs-Halterung nach einem der Ansprüche 1 bis 5, **dadurch gekennzeichnet, dass** das Säulenelement (3) und die Halteelemente (5, 6) und gegebenenfalls die Einfädelhilfe (12, 13) einstückig ausgebildet sind.

7. Kabel-Zugentlastungs-Halterung nach einem der Ansprüche 1 bis 5, **dadurch gekennzeichnet, dass** die Halteelemente (5, 6) und gegebenenfalls die Einfädelhilfe (12, 13) als separate Teile hergestellt sind, die am Säulenelement (3) befestigt sind.

8. Kabel-Zugentlastungs-Halterung nach einem der Ansprüche 1 bis 7, **dadurch gekennzeichnet, dass** sie aus Kunststoff besteht.

## Claims

1. Cable-strain-relief holder (1) for a helically running cable (2), comprising
a column element (3), which extends in an axial direction (a) and has an outer circumferential surface (4), and
at least two retaining elements (5, 6), which are arranged extending radially (r) on the outer circumferential surface (4), wherein the at least two retaining elements (5, 6) are arranged at different axial positions and at different circumferential positions of the column element (3),
**characterized in that**
the retaining elements (5, 6) are arranged on the column element (3) such that they follow an imaginary helical line (w), wherein the column element (3) is connected, by way of one of its axial ends, to a retaining plate (11) and, at its other axial end, is free.

2. Cable-strain-relief holder according to Claim 1, **characterized in that** the retaining elements (5, 6) are of pin-like or rod-like design and extend radially (r) away from the column element (3) in a direction perpendicular to the axial direction (a).

3. Cable-strain-relief holder according to Claim 1 or 2, **characterized in that** the retaining elements (5, 6) have an underside (7, 8), said undersides being designed for abutment of the cable (2) which is to be retained.

4. Cable-strain-relief holder according to Claim 3, **characterized in that** the underside (7, 8) of the retaining elements (5, 6) has a recess (9, 10) which is congruent with the outer shape of the cable (2), in particular is in the form of a part of a circular arc.

5. Cable-strain-relief holder according to one of Claims 1 to 4, **characterized in that** the retaining elements (5, 6) have arranged beneath them at least one pin-like or rod-like introduction aid (12, 13), which extends radially away from the column element (3) in a direction perpendicular to the axial direction (a).

6. Cable-strain-relief holder according to one of Claims 1 to 5, **characterized in that** the column element (3) and the retaining elements (5, 6) and possibly the introduction aid (12, 13) are designed in one piece.

7. Cable-strain-relief holder according to one of Claims 1 to 5, **characterized in that** the retaining elements (5, 6) and possibly the introduction aid (12, 13) are produced as separate parts which are fastened on the column element (3).

8. Cable-strain-relief holder according to one of Claims 1 to 7, **characterized in that** it consists of plastics material.

## Revendications

1. Support de décharge de traction de câble (1) pour un câble s'étendant en hélice (2), comprenant
un élément de colonne (3) qui s'étend dans une direction axiale (a) et qui présente une surface périphérique extérieure (4), et
au moins deux éléments de retenue (5, 6) qui s'étendent radialement (r) et sont disposés sur la surface périphérique extérieure (4), les au moins deux éléments de retenue (5, 6) étant disposés dans des positions axiales différentes et dans des positions périphériques différentes de l'élément de colonne (3),
**caractérisé en ce que**
les éléments de retenue (5, 6) sont disposés sur l'élément de colonne (3) de telle sorte qu'ils suivent une ligne hélicoïdale imaginaire (w), l'élément de colonne (3) étant connecté par l'une de ses extrémités axiales à une plaque de retenue (11) et étant libre à son autre extrémité axiale.

2. Support de décharge de traction de câble selon la revendication 1, **caractérisé en ce que** les éléments de retenue (5, 6) sont réalisés sous forme de goupilles ou de barres et s'étendent perpendiculairement à la direction axiale (a) radialement (r) à l'écart de l'élément de colonne (3).

3. Support de décharge de traction de câble selon la revendication 1 ou 2, **caractérisé en ce que** les éléments de retenue (5, 6) présentent un côté inférieur (7, 8), lesdits côtés inférieurs étant réalisés de manière à permettre l'application du câble (2) à retenir.

4. Support de décharge de traction de câble selon la revendication 3, **caractérisé en ce que** le côté inférieur (7, 8) des éléments de retenue (5, 6) présente un évidement (9, 10) épousant la forme extérieure du câble (2), en particulier présente une configuration en forme de section d'arc de cercle.

5. Support de décharge de traction de câble selon l'une quelconque des revendications 1 à 4, **caractérisé en ce qu'**en dessous des éléments de retenue (5, 6) est disposé au moins un auxiliaire d'enfilage (12, 13) réalisé en forme de goupille ou en forme de barre, lequel s'étend perpendiculairement à la direction axiale (a) radialement à l'écart de l'élément de colonne (3).

6. Support de décharge de traction de câble selon l'une quelconque des revendications 1 à 5, **caractérisé en ce que** l'élément de colonne (3) et les éléments de retenue (5, 6) et éventuellement l'auxiliaire d'enfilage (12, 13) sont réalisés d'une seule pièce.

7. Support de décharge de traction de câble selon l'une quelconque des revendications 1 à 5, **caractérisé en ce que** les éléments de retenue (5, 6) et éventuellement l'auxiliaire d'enfilage (12, 13) sont fabriqués en tant que pièces séparées qui sont fixées sur l'élément de colonne (3).

8. Support de décharge de traction de câble selon l'une quelconque des revendications 1 à 7, **caractérisé en ce qu'**il se compose de plastique.
